# EUROPEAN PATENT APPLICATION

(11) **EP 4 799 724 A1**
(43) Date of publication of application: **02.09.2026**
(21) Application number: 24882566.3
(22) Date of filing: 12.06.2024
(51) Int. Cl.: B01J 20/32, B01J 20/28, B01J 20/22, B01J 20/02, C02F 1/28, G21F 9/12, C02F 101/00

(54) **METHOD FOR MANUFACTURING RADIOACTIVE CESIUM ADSORPTION FILTER AND RADIOACTIVE CESIUM ADSORPTION FILTER FOR HIGH-SPEED PRETREATMENT MANUFACTURED THEREBY**

(30) Priority: 27.10.2023 KR 20230145239
(71) Applicant: Daegu Gyeongbuk Institute of Science and Technology, Daegu 42988 (KR)
(72) Inventor: KIM, Soon Hyun, Sejong 30121 (KR); EUN, Se Min, Seoul 02793 (KR); KIM, Min Seon, Cheongdo-gun Gyeongsangbuk-do 38318 (KR)
(74) Representative: V.O.
(86) International application number: PCT/KR2024/008074
(87) International publication number: WO 2025/089534

(57) **Abstract**

The present invention discloses a method for manufacturing a radioactive cesium adsorption filter and a radioactive cesium adsorption filter for high-speed pretreatment manufactured thereby. The method for manufacturing a radioactive cesium adsorption filter comprises: preparing a transition metal-Prussian blue adsorbent using a transition metal precursor and a Prussian blue precursor; preparing a spinning solution by dissolving the transition metal-Prussian blue adsorbent and a nanofiber polymer in an organic solvent; and manufacturing a radioactive cesium adsorption filter by electrospinning the spinning solution.

## Description

### [Cross-Reference to Related Application]

This application is a National Stage Entry of PCT International Application No. PCT/KR2024/008074, which was filed on June 12, 2024, and claims priority to Korean Patent Application No. 10-2023-0145239, filed on October 27, 2023, in the Korean Intellectual Property Office, the disclosure of which is incorporated herein by reference.

### [Technical Field]

The present invention relates to a method for manufacturing a radioactive cesium adsorption filter and a radioactive cesium adsorption filter for high-speed pretreatment manufactured thereby, and more particularly, to a method for manufacturing a radioactive cesium adsorption filter capable of increasing an adsorption efficiency of cesium by preparing a transition metal-Prussian blue adsorbent, and a radioactive cesium adsorption filter for high-speed pretreatment manufactured thereby.

### [Background Art]

The Fukushima nuclear power plant accident in Japan has caused soil, animals and plants, and waste to be contaminated with radioactive materials, thereby resulting in serious environmental problems. Major radioactive materials generated during a nuclear power plant accident include radioactive iodine and radioactive cesium.

Radioactive iodine has a relatively short half-life of about 8 days, whereas radioactive cesium has a very long half-life of about 30 years. In addition, cesium has chemical properties similar to potassium, and thus, when absorbed, it is accumulated in muscles and the like, causing immune deficiency and various cancers including infertility, bone cancer, lung cancer, thyroid cancer, and breast cancer. Accordingly, when released into the external environment, radioactive cesium needs to be recovered with high efficiency.

Various techniques such as adsorption, solvent extraction, chemical precipitation, membrane processing, coagulation, electrodialysis, and ion exchange have been industrially used to treat radioactive wastewater. Among these, adsorption is known to be a simple and advantageous method for treating large volumes of radioactive wastewater.

For selective adsorption of radioactive cesium, a deep-blue dye called Prussian blue has been used. Prussian blue has a chemical structure of C18Fe7N18 and a chemical name of potassium iron(III) hexacyanoferrate(II), and is one of the earliest synthetic blue pigments, which is prepared by adding iron(III) chloride to a potassium ferrocyanide solution.

Such Prussian blue is known to have excellent adsorption capability for radioactive cesium, and has an effect of reducing the biological half-life of cesium (Cs-137) from 110 days to 30 days. In particular, radioactive cesium ions are selectively adsorbed into crystal pores by bonding between cyano groups present in the structure and metal ions, or potassium ions in a lattice are ion-exchanged with cesium ions, thereby enabling selective adsorption of radioactive cesium ions.

However, conventional radioactive cesium adsorption technologies using Prussian blue have advantages in that adsorption reaction rates are fast and adsorption areas are large due to nano-sized powder, thereby providing excellent adsorption efficiency, but have a problem in that solid-liquid separation after adsorption is difficult, thereby imposing significant limitations on directly using Prussian blue for cesium removal.

Accordingly, studies have been reported in which Prussian blue is immobilized on supports such as zeolite, magnetite, and cellulose to remove cesium. However, when Prussian blue is immobilized on a support, a specific surface area and adsorption efficiency of Prussian blue are reduced, and thus there is an increasing demand for a cesium adsorption technology capable of effectively supporting Prussian blue on a support while maintaining radioactive cesium adsorption performance.

In order to alleviate public concerns caused by the decision to discharge contaminated water from the Fukushima nuclear power plant into the ocean, monitoring of radioactivity in surrounding seawater has been strengthened not only in coastal areas but also in offshore regions. However, conventional methods for analyzing cesium concentration in seawater involve sampling tens of liters of seawater, transporting the samples to an analysis site, adding an adsorbent to adsorb cesium from the seawater, separating the adsorbent from the seawater, and then measuring radioactive cesium adsorbed on the adsorbent. Since the concentration of radioactive cesium in seawater is very low (about 1-2 mBq/kg), a large volume of seawater sample of about 60-100 L is required.

Accordingly, as demand for monitoring radioactivity, particularly cesium concentration, in seawater is expected to continuously increase, there is a need for developing a method for facilitating sampling, transportation, adsorption, separation, and analysis processes of seawater so as to enable rapid and accurate analysis. For this purpose, there is a need to develop a radioactive cesium adsorption filter for high-speed pretreatment usable on-site and a pretreatment method using the same.

### [Disclosure]

### [Technical Problem]

An embodiment of the present invention is directed to increasing an adsorption efficiency of a radioactive cesium adsorption filter, and provides a method for manufacturing a radioactive cesium adsorption filter and a radioactive cesium adsorption filter manufactured thereby, in which a transition metal-Prussian blue adsorbent is configured to increase an adsorption efficiency of cesium and to rapidly adsorb cesium, thereby facilitating analysis of radioactive cesium in seawater.

### [Technical Solution]

An embodiment of the present invention provides a method for manufacturing a radioactive cesium adsorption filter, comprising: preparing a transition metal-Prussian blue adsorbent using a transition metal precursor and a Prussian blue precursor, preparing a spinning solution by dissolving the transition metal-Prussian blue adsorbent and a nanofiber polymer in an organic solvent, and manufacturing a radioactive cesium adsorption filter by electrospinning the spinning solution, wherein the transition metal-Prussian blue adsorbent is represented by Chemical Formula 1:

[Chemical Formula 1] RₙM¹ₓ[M²(CN)₆] · H₂O

wherein R is an alkali metal, M¹ comprises at least one selected from Mn, Ni, Cu, Co, Fe, and Zn, M² comprises at least one selected from Mn, Ni, Cu, Co, Fe, and Zn, n is selected from 0.1 to 3, and x is selected from 1 to 2.

In an embodiment of the present invention, the Prussian blue precursor may be represented by Chemical Formula 2:

[Chemical Formula 2] [M²(CN)₆]^{m-}

wherein M² comprises at least one selected from Mn, Ni, Cu, Co, Fe, and Zn, and m is selected from 3 or 4.

In an embodiment of the present invention, the transition metal precursor may be any one of CoCl₂, CuCl₂, FeCl₂, MnCl₂, NiCl₂, and ZnCl₂.

In an embodiment of the present invention, a weight ratio of the transition metal precursor to the Prussian blue precursor may be in a range of 1:0.5 to 1:2.

In an embodiment of the present invention, the preparing of the transition metal-Prussian blue adsorbent may further comprise irradiating light onto the transition metal-Prussian blue adsorbent, wherein the light is ultraviolet light or visible light.

In an embodiment of the present invention, the irradiating of the light may reduce the Prussian blue precursor.

In an embodiment of the present invention, a wavelength of the light may be in a range of 250 nm to 600 nm.

In an embodiment of the present invention, the light may be irradiated for 5 minutes to 48 hours.

In an embodiment of the present invention, the preparing of the transition metal-Prussian blue adsorbent may comprise controlling a number of the alkali metal by adjusting an oxidation state of the Prussian blue precursor.

In an embodiment of the present invention, the transition metal precursor may be zinc sulfate (ZnSO₄) or zinc chloride (ZnCl₂).

In an embodiment of the present invention, the preparing of the spinning solution may comprise: preparing a polymer-organic solvent solution by dissolving the nanofiber polymer in the organic solvent, and preparing the spinning solution by adding the transition metal-Prussian blue adsorbent to the polymer-organic solvent solution.

In an embodiment of the present invention, the nanofiber polymer may be included in an amount of 5 parts by weight to 30 parts by weight based on 100 parts by weight of the spinning solution.

In an embodiment of the present invention, the transition metal-Prussian blue adsorbent may be included in an amount of 0.1 parts by weight to 20 parts by weight based on 100 parts by weight of the spinning solution.

In an embodiment of the present invention, the nanofiber polymer may be any one selected from polyacrylonitrile, polystyrene, polymethyl methacrylate, polyurethane, nylon 6, nylon 66, polylactic acid, polycarbonate, polyvinylidene chloride, polyvinylidene fluoride, polyvinyl alcohol, polyethylene oxide, polyvinyl chloride, polybenzimidazole, polyethylene terephthalate, polyethylene, and polypropylene.

In another embodiment of the present invention, a radioactive cesium adsorption filter for high-speed pretreatment comprises: a nanofiber filter, and a transition metal-Prussian blue adsorbent supported on the nanofiber filter, wherein the transition metal-Prussian blue adsorbent is represented by Chemical Formula 1:

[Chemical Formula 1] RₙM¹ₓ[M²(CN)₆] · H₂O

wherein R is an alkali metal,
M¹ comprises at least one selected from Mn, Ni, Cu, Co, Fe, and Zn, M² comprises at least one selected from Mn, Ni, Cu, Co, Fe, and Zn, n is selected from 0.1 to 3, and x is selected from 1 to 2.

In another embodiment of the present invention, an adsorption rate may be controlled according to at least one of a thickness or a mass of the radioactive cesium adsorption filter for high-speed pretreatment.

### [Advantageous effects]

An embodiment of the present invention is directed to increasing an adsorption efficiency of a radioactive cesium adsorption filter, and may provide a method for manufacturing a radioactive cesium adsorption filter and a radioactive cesium adsorption filter manufactured thereby, in which a transition metal-Prussian blue adsorbent is prepared by irradiating light to increase the adsorption efficiency.

In addition, an embodiment of the present invention may provide a method for manufacturing a radioactive cesium adsorption filter and a radioactive cesium adsorption filter manufactured thereby, in which a transition metal-Prussian blue adsorbent is prepared by controlling an oxidation state to control a number of an alkali metal, thereby increasing an adsorption efficiency of cesium.

Further, an embodiment of the present invention may provide a radioactive cesium adsorption filter in which Prussian blue is prepared using a transition metal to improve efficiency, wherein the radioactive cesium adsorption filter is used for high-speed sampling so as to selectively adsorb an ultra-trace amount of radioactive cesium, allow a large volume of seawater to pass therethrough within a short time, and be directly applicable to a detector.

### [Description of Drawings]

FIG. 1 is a flowchart illustrating a method for manufacturing a radioactive cesium adsorption filter according to an embodiment of the present invention.
FIG. 2 is a diagram illustrating a mechanism in which ferric ions (Fe³⁺) of Prussian blue are reduced to ferrous ions (Fe²⁺) according to an embodiment of the present invention.
FIG. 3 is a flowchart illustrating a step of preparing a spinning solution by dissolving a transition metal-Prussian blue adsorbent and a nanofiber polymer in an organic solvent according to an embodiment of the present invention.
FIG. 4 is a schematic diagram illustrating a process of preparing a transition metal-Prussian blue adsorbent supported on a nanofiber filter through an electrospinning method according to an embodiment of the present invention.
FIG. 5 is a schematic diagram illustrating a transition metal-Prussian blue adsorbent supported on a nanofiber filter according to an embodiment of the present invention.
FIG. 6 is a schematic diagram illustrating an adsorption process of a transition metal-Prussian blue adsorbent according to an embodiment of the present invention.
FIG. 7 is an image illustrating a configuration of a filter and a filter holder according to an embodiment of the present invention.
FIG. 8 is an image and an SEM image of a Prussian blue adsorbent (Example 1) including a transition metal precursor and a Prussian blue precursor in the method for manufacturing a radioactive cesium adsorption filter according to an embodiment of the present invention.
FIG. 9 is a graph illustrating cesium (Cs⁺) adsorption capacity according to a Prussian blue adsorbent (Example 1) including a transition metal precursor and a Prussian blue precursor in the method for manufacturing a radioactive cesium adsorption filter according to an embodiment of the present invention.
FIG. 10 shows an image, an SEM image, and a graph of EDS elemental composition analysis results of Prussian blue adsorbents (Example 1, Example 2, and Example 3) in the method for manufacturing a radioactive cesium adsorption filter according to an embodiment of the present invention.
FIG. 11 is a graph illustrating XPS analysis results of Prussian blue adsorbents (Example 1, Example 2, and Example 3) in the method for manufacturing a radioactive cesium adsorption filter according to an embodiment of the present invention.
FIG. 12 is a graph comparing KL values showing reactivity between a Prussian blue adsorbent and cesium ions under a low-concentration cesium condition for Prussian blue adsorbents (Example 1, Example 2, and Example 3) in the method for manufacturing a radioactive cesium adsorption filter according to an embodiment of the present invention.
FIG. 13 is a graph comparing a cesium ion adsorption concentration and a concentration of K⁺ released into a solution for Prussian blue adsorbents (Example 1, Example 2, and Example 3) in the method for manufacturing a radioactive cesium adsorption filter according to an embodiment of the present invention.
FIG. 14 is an image of a radioactive cesium adsorption filter (Example 4) including a transition metal-Prussian blue adsorbent according to Example 1 in the method for manufacturing a radioactive cesium adsorption filter according to an embodiment of the present invention.
FIG. 15 is a schematic diagram of an experiment including a radioactive cesium adsorption filter (Example 4) including a transition metal-Prussian blue adsorbent according to Example 1, and a graph comparing a degree of cesium adsorption.
FIG. 16 is an image of a radioactive cesium adsorption filter not including a transition metal-Prussian blue adsorbent with a light irradiation reaction added (Comparative Example 1), and a radioactive cesium adsorption filter (Example 5) including a transition metal-Prussian blue adsorbent according to Example 2.
FIG. 17 is an SEM image of a transition metal-Prussian blue adsorbent (Example 2) with a light irradiation reaction added, a radioactive cesium adsorption filter not including a transition metal-Prussian blue adsorbent with a light irradiation reaction added (Comparative Example 1), and a radioactive cesium adsorption filter (Example 5) including a transition metal-Prussian blue adsorbent according to Example 2.
FIG. 18 is a graph illustrating XRD and FT-IR results of a transition metal-Prussian blue adsorbent (Example 2) with a light irradiation reaction added, a radioactive cesium adsorption filter not including a transition metal-Prussian blue adsorbent with a light irradiation reaction added (Comparative Example 1), and a radioactive cesium adsorption filter (Example 5) including a transition metal-Prussian blue adsorbent according to Example 2.
FIG. 19 is an image of a radioactive cesium adsorption filter (Example 5) including a transition metal-Prussian blue adsorbent according to Example 2, and a table measuring an adsorbent thickness.
FIG. 20 is a graph comparing cesium adsorption capacity of distilled water (DI water) and seawater using a radioactive cesium adsorption filter (Example 5) including a transition metal-Prussian blue adsorbent according to Example 2.
FIG. 21 is a graph comparing adsorption amounts over time according to cesium concentrations using a radioactive cesium adsorption filter (Example 5) including a transition metal-Prussian blue adsorbent according to Example 2.
FIG. 22 is a graph comparing adsorption efficiency according to cesium concentrations using a radioactive cesium adsorption filter (Example 5) including a transition metal-Prussian blue adsorbent according to Example 2.
FIG. 23 is a schematic diagram illustrating a process of performing cesium adsorption using a radioactive cesium adsorption filter (Example 5) including a transition metal-Prussian blue adsorbent according to Example 2.
FIG. 24 is a graph comparing a cesium adsorption rate of a radioactive cesium adsorption filter (Example 5) including a transition metal-Prussian blue adsorbent according to Example 2.
FIG. 25 is a graph comparing a cesium adsorption rate according to an adsorbent weight of a radioactive cesium adsorption filter (Example 5) including a transition metal-Prussian blue adsorbent according to Example 2.

### [Best Mode]

Hereinafter, embodiments of the present invention will be described in detail with reference to the accompanying drawings and the descriptions set forth therein. However, the present invention is not limited to or restricted by the embodiments.

The terms used in the present specification are for describing the embodiments and are not intended to limit the present invention. In the present specification, singular forms include plural forms unless the context clearly indicates otherwise. In addition, the terms "comprises" and/or "comprising" used herein do not preclude the presence or addition of one or more other elements or steps in addition to the stated elements or steps.

The terms "embodiment," "example," "aspect," "illustration," and the like used herein should not be construed as indicating that any particular aspect or design is superior to or advantageous over other aspects or designs.

Further, the term "or" is intended to mean an inclusive OR rather than an exclusive OR. That is, unless otherwise specified or clearly understood from the context, the expression "x uses a or b" is intended to mean any one of the natural inclusive permutations.

In addition, as used in the present specification and the claims, the singular forms "a" or "an" are intended to include "one or more" unless otherwise indicated or clearly understood from the context to be directed to a singular form.

The terminology used in the following description has been selected from terms that are general and widely used in the relevant technical field. However, other terms may be used depending on technological development and/or changes, practices, or preferences of those skilled in the art. Accordingly, the terms used in the following description should not be construed as limiting the technical spirit of the present invention but should be understood as illustrative terms for describing the embodiments.

In addition, in certain cases, terms arbitrarily selected by the applicant may be used, and in such cases, meanings thereof will be described in detail in the relevant portions of the description. Accordingly, the terms used in the following description should be understood based on the meanings of the terms and the overall context of the present specification, rather than being limited to their literal expressions.

Unless otherwise defined, all terms (including technical and scientific terms) used herein may be understood as having meanings commonly understood by those of ordinary skill in the art to which the present invention pertains. In addition, terms defined in commonly used dictionaries should not be interpreted in an idealized or overly formal sense unless expressly so defined.

Meanwhile, in describing the present invention, when it is determined that a detailed description of a related known function or configuration may unnecessarily obscure the gist of the present invention, such detailed description will be omitted. Further, the terminology used herein has been selected for appropriately describing the embodiments of the present invention and may vary depending on the intention of users or operators or the practices in the art to which the present invention pertains. Therefore, definitions of these terms should be made based on the overall contents of the present specification.

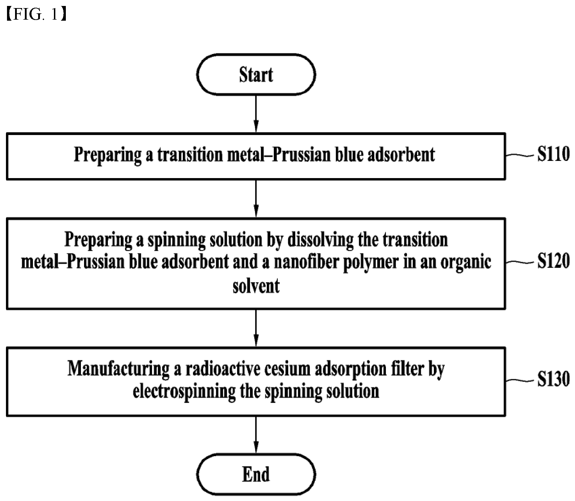

FIG. 1 is a flowchart illustrating a method for manufacturing a radioactive cesium adsorption filter according to an embodiment of the present invention.

The method for manufacturing a radioactive cesium adsorption filter according to an embodiment of the present invention comprises preparing a transition metal-Prussian blue adsorbent using a transition metal precursor and a Prussian blue precursor (S110), preparing a spinning solution by dissolving the transition metal-Prussian blue adsorbent and a nanofiber polymer in an organic solvent (S120), and manufacturing a radioactive cesium adsorption filter by electrospinning the spinning solution.

Accordingly, the method for manufacturing a radioactive cesium adsorption filter according to an embodiment of the present invention may increase an efficiency of the radioactive cesium adsorption filter by preparing the transition metal-Prussian blue adsorbent and using light irradiation and precursors having different oxidation states.

First, the method for manufacturing a radioactive cesium adsorption filter according to an embodiment of the present invention performs the step (S110) of preparing a transition metal-Prussian blue adsorbent using a transition metal precursor and a Prussian blue precursor.

In step S110, the transition metal precursor may be any one of CoCl₂, CuCl₂, FeCl₂, MnCl₂, NiCl₂, and ZnCl₂.

In addition, in step S110, the Prussian blue precursor may be represented by Chemical Formula 2:

[Chemical Formula 2] [M²(CN)₆]^{m-}

wherein M² comprises at least one selected from Mn, Ni, Cu, Co, Fe, and Zn, and m is selected from 3 or 4.

A weight ratio of the transition metal precursor to the Prussian blue precursor may be in a range of 1:0.5 to 1:2.

For example, when a reaction occurs at a weight ratio of 1:1 between the transition metal precursor and the Prussian blue precursor according to an embodiment of the present invention, even if the ratio is less than or greater than 1:1, remaining precursors may be removed during a washing process after sufficient binding, and thus an effect on a final product may be insignificant, such that no problem may occur.

In the step (S110) of preparing the transition metal-Prussian blue adsorbent according to an embodiment of the present invention, the transition metal-Prussian blue adsorbent may be represented by Chemical Formula 1:

[Chemical Formula 1] RₙM¹ₓ[M²(CN)₆] · H₂O

wherein R is an alkali metal, M¹ comprises at least one selected from Mn, Ni, Cu, Co, Fe, and Zn, M² comprises at least one selected from Mn, Ni, Cu, Co, Fe, and Zn, n is selected from 0.1 to 3, and x is selected from 1 to 2.

For example, referring to Chemical Formula 1, the transition metal-Prussian blue adsorbent may be K_{0.16}Mn_{1.43}[Fe(CN)₆]·12.4H₂O, K_{0.04}Ni_{1.35}[Fe(CN)₆]·10.4H₂O, K_{0.04}Cu_{1.63}[Fe(CN)₆]·10.3H₂O, K_{0.37}Co_{1.37}[Fe(CN)₆]·9.28H₂O, K_{1.15}Fe_{1.7}[Fe(CN)₆]·6.96H₂O, or K_{0.1}Cu_{1.43}[Fe(CN)₆]·5.41H₂O.

In addition, a transition metal-Prussian blue adsorbent prepared by adding a light irradiation reaction may be K_{0.81}Zn_{1.3}[Fe(CN)₆]·5.38H₂O, and a transition metal-Prussian blue adsorbent prepared by controlling an oxidation state may be K_{0.51}Zn_{1.8}[Fe(CN)₆]·6.98H₂O.

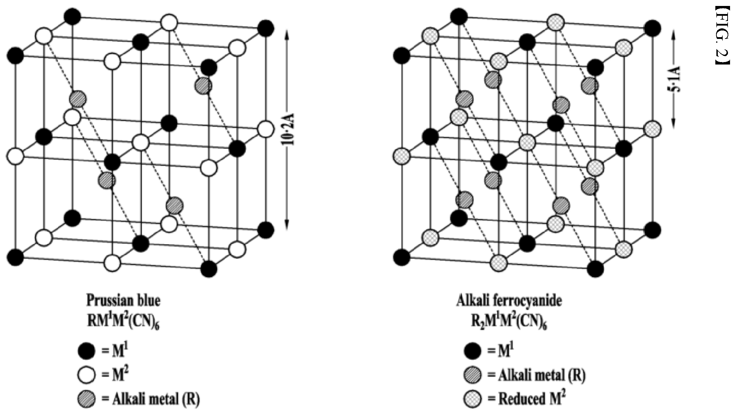

FIG. 2 is a diagram illustrating a mechanism in which ferric ions (Fe³⁺) of Prussian blue are reduced to ferrous ions (Fe²⁺) according to an embodiment of the present invention.

Prussian blue has a face-centered cubic lattice structure and includes a metal cation M1, a metal cation M², and an alkali metal R. When the M² portion of Prussian blue according to an embodiment of the present invention is in a reduced state, reduced M² of ferrous alkali ferrocyanide is exhibited, and since one additional alkali metal may be incorporated in the reduced M2 state, an adsorption capacity for radioactive cesium may be improved.

In addition, the step (S110) of preparing the transition metal-Prussian blue adsorbent may further comprise irradiating light onto the transition metal-Prussian blue adsorbent, wherein the light is ultraviolet light or visible light.

Referring to FIG. 2, the irradiating of the light may reduce the Prussian blue precursor, thereby improving adsorption performance and enabling effective and selective removal of radioactive cesium.

After the Prussian blue precursor is synthesized with the transition metal precursor, synthesized Prussian blue may absorb light and be reduced, and Fe³⁺ in hexacyanoferrate within the Prussian blue structure synthesized with transition metal-hexacyano iron potassium may be reduced to Fe²⁺, thereby improving adsorption capacity for radioactive cesium.

In the irradiating of the light, a wavelength of the light may be in a range of 250 nm to 600 nm. If the wavelength is less than 250 nm, undesired additional reactions may occur, and if the wavelength exceeds 600 nm, there may be a problem in that Prussian blue absorbs visible light and induces an electron transfer reaction.

In the irradiating of the light, ultraviolet light or visible light may be irradiated for 5 minutes to 48 hours. If the irradiation time is less than 5 minutes, the irradiation time may be insufficient, resulting in incomplete reduction of Prussian blue, and if the irradiation time exceeds 48 hours, the reduction reaction may sufficiently occur but may be inefficient.

The radioactive cesium adsorption filter according to an embodiment of the present invention uses Prussian blue. In general, Prussian blue may be prepared by adding iron chloride to a ferrocyanide salt solution (e.g., sodium ferrocyanide, potassium ferrocyanide, ammonium ferrocyanide), and as one of chelating agents, it may be used as an emergency treatment when contaminated with radioactive 137Cs. When Prussian blue is administered, a biological half-life of 137Cs may be reduced from 110 days to 30 days.

Accordingly, Prussian blue not only has high selectivity for radioactive cesium among various radioactive materials, but also exhibits excellent adsorption rate and removal rate for radioactive cesium.

In an embodiment of the present invention, ferric ions (Fe³⁺) of Prussian blue are reduced to ferrous ions (Fe²⁺), thereby further improving adsorption rate and removal rate of Prussian blue.

In addition, the step (S110) of preparing the transition metal-Prussian blue adsorbent may comprise controlling a number of the alkali metal by adjusting an oxidation state of the Prussian blue precursor.

In general, Prussian blue has a structural characteristic in that a uniform face-centered cubic lattice structure forms lattice spaces capable of adsorbing cations, since metal ions are connected by cyano groups.

Using the lattice space of Prussian blue, alkali metals may be easily adsorbed, and it is known that adsorption selectivity follows an order of Cs⁺, K⁺, and Na⁺ depending on a hydrated ionic size. Cesium ions (Cs⁺) have the most suitable ionic radius for the lattice structure of Prussian blue, and thus adsorption may most effectively occur.

Accordingly, in the step (S110) of preparing the transition metal-Prussian blue adsorbent, the Prussian blue precursor may be controlled in oxidation state such that, in a finally synthesized transition metal-Prussian blue adsorbent structure, Fe³⁺ in hexacyanoferrate is reduced to Fe²⁺, thereby enabling control of a number of alkali metals and consequently improving structural characteristics of Prussian blue and increasing adsorption efficiency.

Further, when controlling the oxidation state of the Prussian blue precursor, the transition metal precursor may be zinc sulfate (ZnSO₄) or zinc chloride (ZnCl₂).

Thereafter, the method for manufacturing a radioactive cesium adsorption filter according to an embodiment of the present invention proceeds to the step (S120) of preparing a spinning solution by dissolving the transition metal-Prussian blue adsorbent and a nanofiber polymer in an organic solvent.

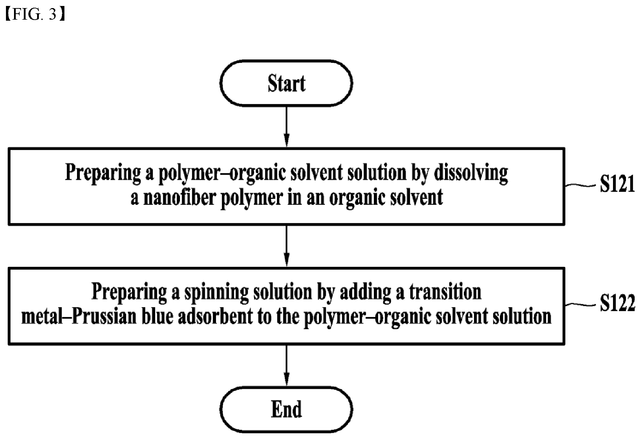

FIG. 3 is a flowchart illustrating a step of preparing a spinning solution by dissolving a transition metal-Prussian blue adsorbent and a nanofiber polymer in an organic solvent according to an embodiment of the present invention.

Referring to FIG. 3, the preparing of the spinning solution may comprise a step (S121) of preparing a polymer-organic solvent solution by dissolving the nanofiber polymer in the organic solvent, and a step (S122) of preparing the spinning solution by adding the transition metal-Prussian blue adsorbent to the polymer-organic solvent solution.

In step S121, the organic solvent used in the preparing of the spinning solution may be any one of dimethylformamide (N,N-dimethylformamide, DMF), dimethylacetamide (N,N-dimethylacetamide, DMAc), acetonitrile (MeCN), dimethyl sulfoxide (DMSO), acetone, dichloromethane, tetrahydrofuran (THF), and ethyl acetate.

In step S121, the nanofiber polymer may be included in an amount of 5 parts by weight to 30 parts by weight based on 100 parts by weight of the spinning solution. When the amount is less than 5 parts by weight, viscosity may be too low, making it difficult to form fibers, and when the amount exceeds 30 parts by weight, viscosity may be too high, causing difficulty in passing through a nozzle.

In addition, the nanofiber polymer may be any one selected from polyacrylonitrile (PAN), polystyrene, polymethyl methacrylate (PMMA), polyurethane, nylon 6, nylon 66, polylactic acid, polycarbonate (PC), polyvinylidene chloride, polyvinylidene fluoride (PVDF), polyvinyl alcohol, polyethylene oxide, polyvinyl chloride (PVC), polybenzimidazole (PBI), polyethylene terephthalate (PET), polyethylene, and polypropylene (PP).

In an embodiment of the present invention, polyacrylonitrile (PAN), which is a nanofiber polymer, is used to prepare nanofibers capable of immobilizing Prussian blue. However, the present invention is not limited thereto, and any polymer capable of forming fibers by electrospinning may be used.

Subsequently, in the step (S122) of preparing the spinning solution by adding the transition metal-Prussian blue adsorbent to the polymer-organic solvent solution, the transition metal-Prussian blue adsorbent may be included in an amount of 0.1 parts by weight to 20 parts by weight based on 100 parts by weight of the spinning solution. When the amount is less than 0.1 parts by weight, an effect of adding the Prussian blue adsorbent may be insignificant, and when the amount exceeds 20 parts by weight, the Prussian blue adsorbents may aggregate with each other, thereby causing nozzle clogging during electrospinning.

Finally, the method for manufacturing a radioactive cesium adsorption filter according to an embodiment of the present invention proceeds to a step (S130) of manufacturing a radioactive cesium adsorption filter by electrospinning the spinning solution.

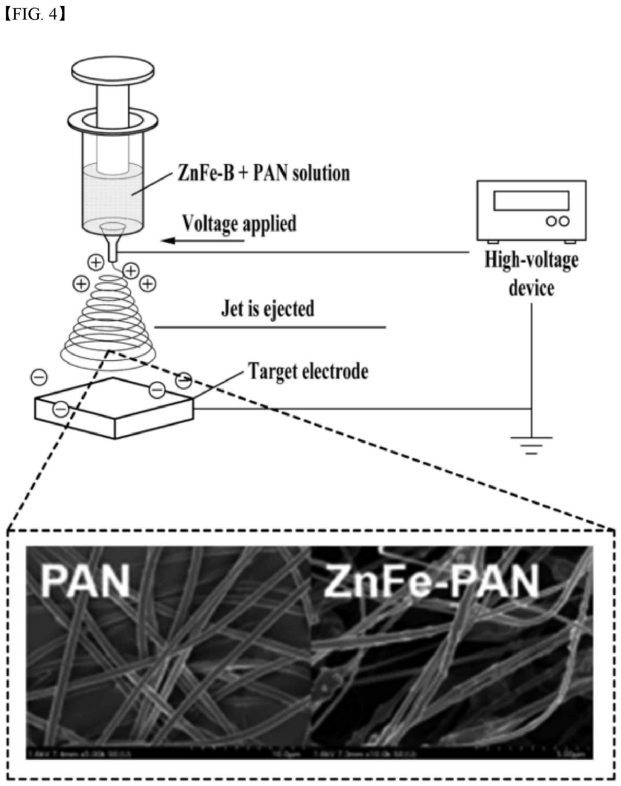

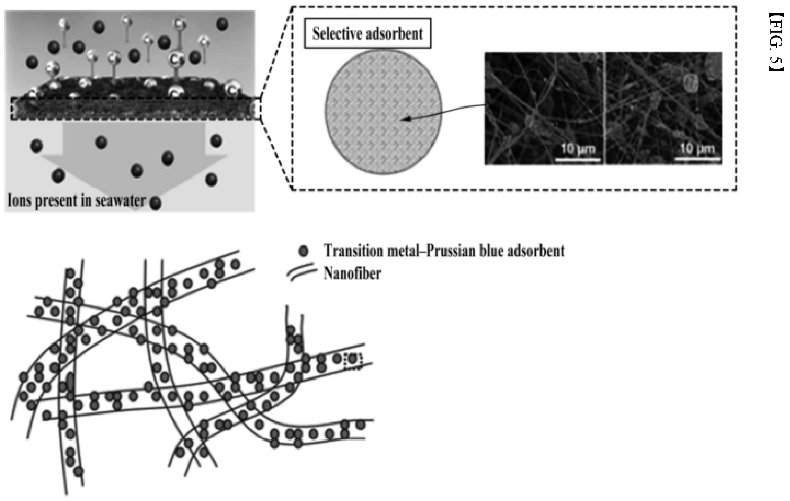

FIG. 4 is a schematic diagram illustrating a process of preparing a transition metal-Prussian blue adsorbent supported on a nanofiber filter through an electrospinning method according to an embodiment of the present invention, and FIG. 5 is an image of a transition metal-Prussian blue adsorbent supported on a nanofiber filter according to an embodiment of the present invention.

In general, electrospinning methods include single nozzle spinning, multi-nozzle spinning, three-plate spinning, and nozzle-less electrospinning. In an embodiment of the present invention, electrospinning is performed using single nozzle spinning.

Referring to FIG. 4, a spinning solution prepared by dissolving a nanofiber polymer and a transition metal-Prussian blue adsorbent in an organic solvent is supplied to a single spinning nozzle, and the spinning nozzle applies a high voltage to form an electric field, thereby manufacturing a radioactive cesium adsorption filter.

Further, referring to FIGS. 4 and 5, a radioactive cesium adsorption filter for high-speed pretreatment comprises a nanofiber filter and a transition metal-Prussian blue adsorbent supported on the nanofiber filter, wherein the transition metal-Prussian blue adsorbent may be represented by Chemical Formula 1:

[Chemical Formula 1] RₙM¹ₓ[M²(CN)₆] · H₂O

(Wherein, in Chemical Formula 1, R is an alkali metal, M¹ comprises at least one selected from Mn, Ni, Cu, Co, Fe, and Zn, M² comprises at least one selected from Mn, Ni, Cu, Co, Fe, and Zn, n is selected from 0.1 to 3, and x is selected from 1 to 2.)

In another embodiment of the present invention, an adsorption rate may be controlled according to at least one of a thickness or a mass of the radioactive cesium adsorption filter for high-speed pretreatment.

A permeability may vary depending on at least one of the thickness or the mass of the radioactive cesium adsorption filter for high-speed pretreatment, and depending on the permeability, there may be problems in that pore clogging occurs after introduction of Prussian blue and a contact ratio between Prussian blue and a solution is reduced, thereby decreasing treatment efficiency.

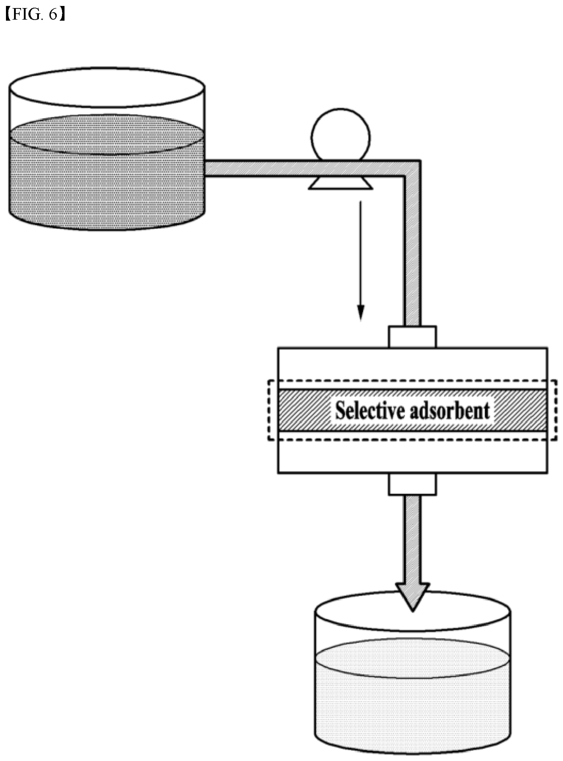

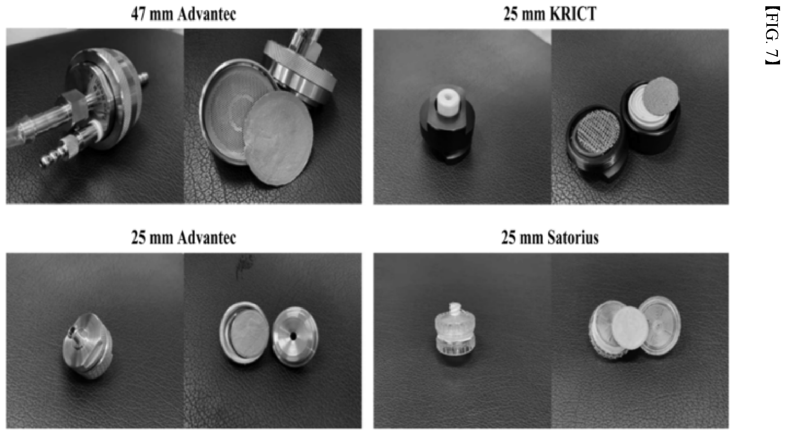

FIG. 6 is a schematic diagram illustrating an adsorption process of a transition metal-Prussian blue adsorbent according to an embodiment of the present invention, and FIG. 7 is an image illustrating a configuration of a filter and a filter holder according to an embodiment of the present invention.

Referring to FIGS. 6 and 7, the radioactive cesium adsorption filter according to an embodiment of the present invention is mounted on the filter holder of FIG. 7 and used as a radioactive cesium adsorption filter for high-speed pretreatment. The radioactive cesium adsorption filter may further comprise an auxiliary filter of 25 mm or 47 mm and an additional mesh disposed above and below the filter (Advantec, KRiCT, and Sartorius).

### Preparation Example

### Comparative Example 1: Radioactive cesium adsorption filter not including a transition metal-Prussian blue adsorbent with a light irradiation reaction added

A spinning solution was prepared by dissolving 10 parts by weight of a nanofiber polymer, based on 100 parts by weight of the spinning solution, in a DMF solvent, without including a transition metal-Prussian blue adsorbent with a light irradiation reaction added according to Example 2. Electrospinning was performed under conditions of a needle diameter of 18G, a flow rate of 0.5 mL/hr, and a distance between a needle and a collector of 15 cm.

### Example 1: Prussian blue adsorbent including a transition metal precursor and a Prussian blue precursor

For preparation of Prussian blue adsorbents (CoFe, CuFe, FeFe, MnFe, NiFe, and ZnFe), 200 mL of a 100 mM transition metal precursor (CoCl₂, CuCl₂, FeCl₂, MnCl₂, NiCl₂, and ZnCl₂) and 200 mL of a 100 mM Prussian blue precursor (hexacyanoferrate(III), HCF(III)) were prepared. The Prussian blue adsorbents were prepared by dropwise adding the prepared HCF(III) solution to the transition metal precursor solutions at a rate of 1 mL/min. The prepared Prussian blue adsorbents were subjected to a stabilization process for 12 hours, washed with distilled water to remove unreacted precursors, and then freeze-dried to obtain powder samples.

### Example 2: Transition metal-Prussian blue adsorbent with a light irradiation reaction added

200 mL of a 100 mM transition metal precursor ZnCl₂ was prepared, and a Prussian blue adsorbent was prepared by dropwise adding a 100 mM Prussian blue precursor HCF(III) at a rate of 1 mL/min. The prepared Prussian blue adsorbent was subjected to light irradiation for 24 hours using a 450 W UV (mercury-vapor) lamp to prepare a transition metal-Prussian blue adsorbent. The light-irradiated transition metal-Prussian blue adsorbent was washed with distilled water to remove unreacted precursors and then freeze-dried to obtain a powder sample.

### Example 3: Transition metal-Prussian blue adsorbent with a controlled oxidation state

200 mL of a 100 mM transition metal precursor ZnSO₄ was prepared, and a Prussian blue adsorbent was prepared by dropwise adding a 100 mM Prussian blue precursor HCF(III) at a rate of 1 mL/min at a temperature of 80°C. The transition metal-Prussian blue adsorbent with a controlled oxidation state was subjected to a stabilization process for 12 hours, washed with distilled water to remove unreacted precursors, and then dried in an oven at 80°C to obtain a powder sample. The obtained powder was finely ground and used.

### Example 4: Radioactive cesium adsorption filter including a transition metal-Prussian blue adsorbent according to Example 1

A radioactive cesium adsorption filter including a Prussian blue adsorbent was manufactured by electrospinning using the Prussian blue adsorbent including a transition metal precursor and a Prussian blue precursor according to Example 1. A spinning solution was prepared by dissolving 10 parts by weight of the transition metal-Prussian blue adsorbent and 10 parts by weight of a nanofiber polymer, based on 100 parts by weight of the spinning solution, in a DMF solvent. Electrospinning was performed under conditions of a needle diameter of 18G, a flow rate of 0.5 mL/hr, and a distance between a needle and a collector of 15 cm.

### Example 5: Radioactive cesium adsorption filter including a transition metal-Prussian blue adsorbent according to Example 2

A radioactive cesium adsorption filter was manufactured by electrospinning using the transition metal-Prussian blue adsorbent with a light irradiation reaction added according to Example 2. A spinning solution was prepared by dissolving 10 parts by weight of the transition metal-Prussian blue adsorbent and 10 parts by weight of a nanofiber polymer, based on 100 parts by weight of the spinning solution, in a DMF solvent. Electrospinning was performed under conditions of a needle diameter of 18G, a flow rate of 0.5 mL/hr, and a distance between a needle and a collector of 15 cm.

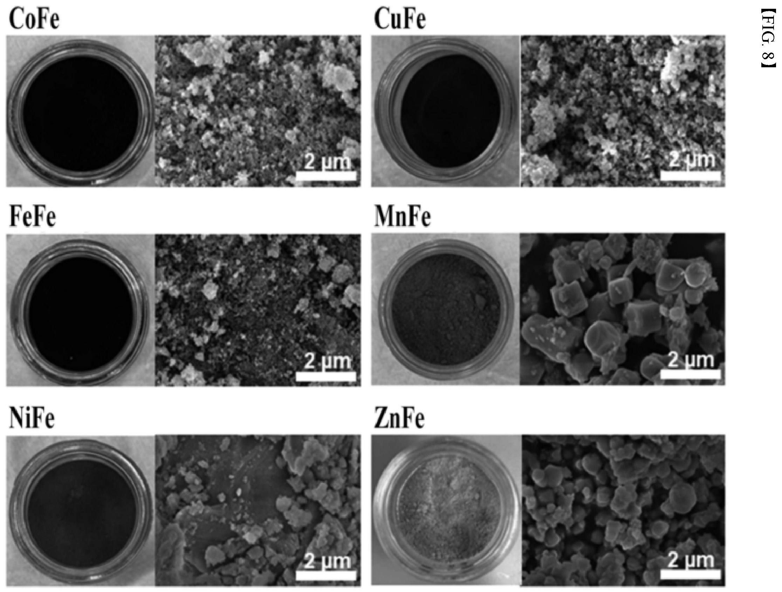

FIG. 8 is an image and an SEM image of a Prussian blue adsorbent (Example 1) including a transition metal precursor and a Prussian blue precursor in a method for manufacturing a radioactive cesium adsorption filter according to an embodiment of the present invention.

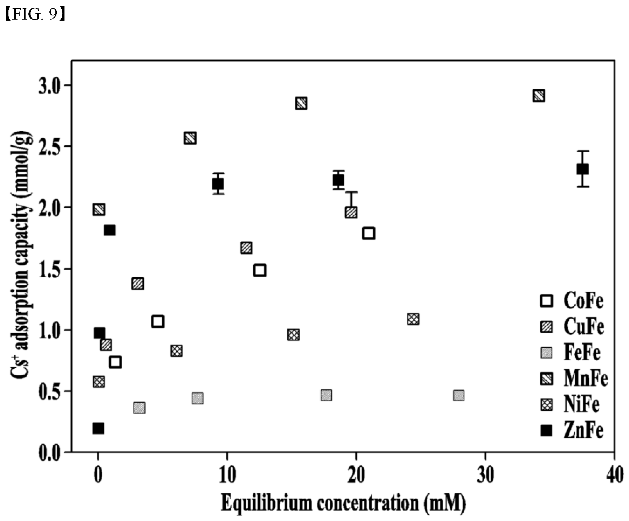

FIG. 9 is a graph illustrating cesium (Cs⁺) adsorption capacity of a Prussian blue adsorbent (Example 1) including a transition metal precursor and a Prussian blue precursor in the method for manufacturing a radioactive cesium adsorption filter according to an embodiment of the present invention.

Referring to FIGS. 8 and 9, cesium adsorption amounts vary depending on the transition metal precursors CoFe, CuFe, FeFe, MnFe, NiFe, and ZnFe, and it can be confirmed that Prussian blue adsorbents of MnFe and ZnFe exhibit higher efficiency than those of CoFe, CuFe, FeFe, and NiFe.

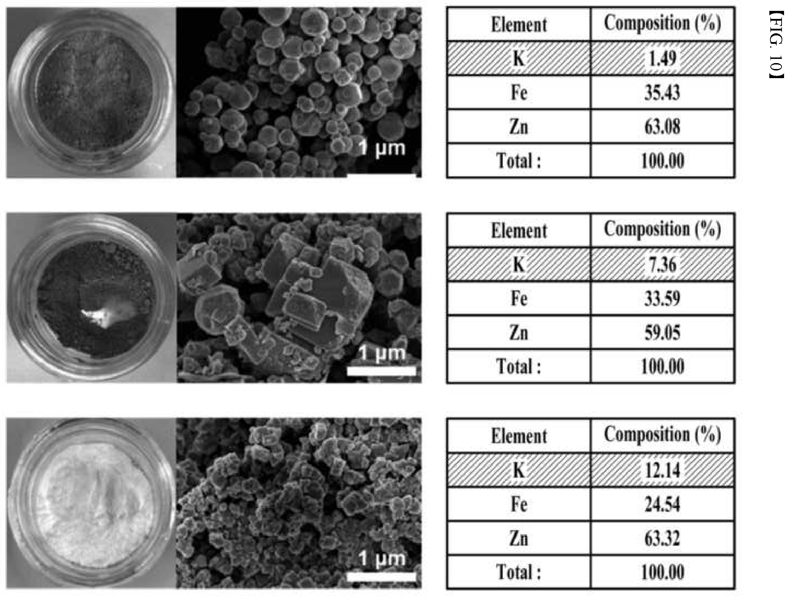

FIG. 10 is an image, an SEM image, and a graph illustrating EDS elemental composition analysis results of Prussian blue adsorbents (Example 1, Example 2, and Example 3) in the method for manufacturing a radioactive cesium adsorption filter according to an embodiment of the present invention.

Referring to FIG. 10, a composition ratio of potassium (K) is 12.14% for a transition metal-Prussian blue adsorbent with a controlled oxidation state (Example 3, ZnFe-W), 7.36% for a transition metal-Prussian blue adsorbent with a light irradiation reaction added (Example 2, ZnFe-B), and 1.49% for a Prussian blue adsorbent including a transition metal precursor and a Prussian blue precursor (Example 1, ZnFe-Y). Thus, it can be confirmed that the transition metal-Prussian blue adsorbent with a controlled oxidation state (Example 3, ZnFe-W) has the highest potassium (K) composition ratio.

Prussian blue is a hydrate of iron ferrocyanide, which is a type of iron cyanide, and provides a uniform lattice space capable of adsorbing cations, such that cesium hydrates may be selectively adsorbed into pores within the crystal. The lattice space contains K⁺ ions, thereby enabling selective adsorption of cesium ions having an ionic radius smaller than that of K⁺ ions.

Accordingly, referring to FIG. 10, since the transition metal-Prussian blue adsorbent with a controlled oxidation state (Example 3) has the highest potassium (K) composition ratio, it may have the highest adsorption capacity for cesium ions.

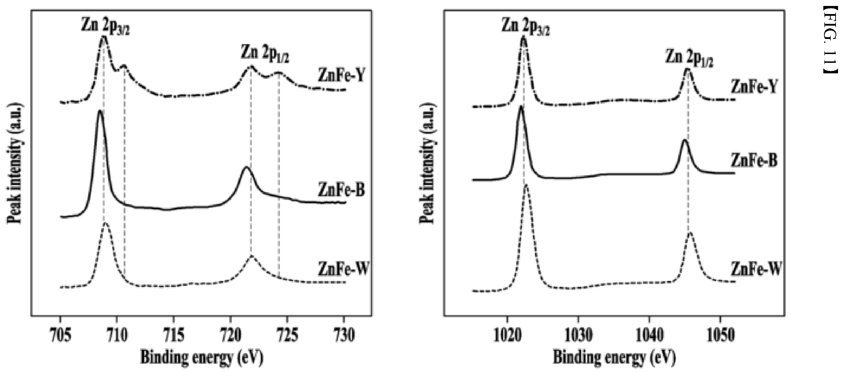

FIG. 11 is a graph illustrating XPS analysis results of Prussian blue adsorbents (Example 1, Example 2, and Example 3) in a method for manufacturing a radioactive cesium adsorption filter according to an embodiment of the present invention.

Referring to FIG. 11, although oxidation states of zinc (Zn) are similar among a Prussian blue adsorbent including a transition metal precursor and a Prussian blue precursor (Example 1, ZnFe-Y), a transition metal-Prussian blue adsorbent with a light irradiation reaction added (Example 2, ZnFe-B), and a transition metal-Prussian blue adsorbent with a controlled oxidation state (Example 3, ZnFe-W), oxidation states of iron (Fe) are different.

The Prussian blue adsorbent including a transition metal precursor and a Prussian blue precursor (Example 1, ZnFe-Y) exhibits peaks of Fe²⁺ at a binding energy of 708.8 eV and Fe³⁺ at a binding energy of 710.6 eV. However, the transition metal-Prussian blue adsorbent with a light irradiation reaction added (Example 2, ZnFe-B) shows a dominant peak of Fe²⁺, since Fe³⁺ is reduced to Fe²⁺ through the light irradiation reaction.

In contrast, the transition metal-Prussian blue adsorbent with a controlled oxidation state (Example 3, ZnFe-W) exhibits only a peak of Fe²⁺, since it is prepared using a Prussian blue precursor containing Fe²⁺ in the preparation process of the transition metal-Prussian blue adsorbent.

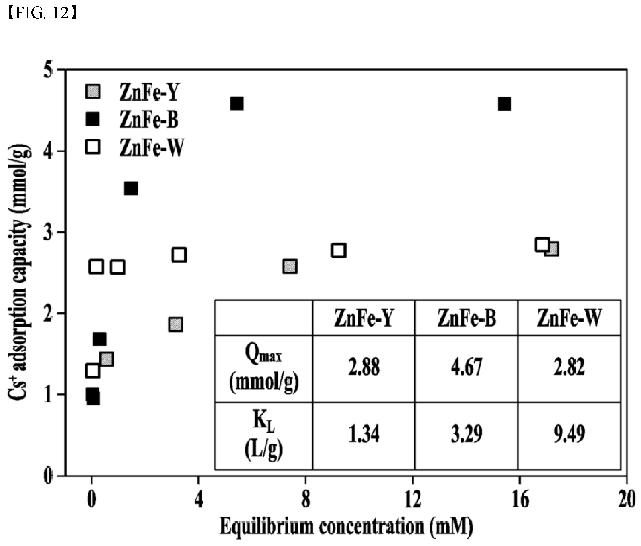

FIG. 12 is a graph comparing K_{L} values showing reactivity between a Prussian blue adsorbent and cesium ions under a low-concentration cesium condition for Prussian blue adsorbents (Example 1, Example 2, and Example 3) in the method for manufacturing a radioactive cesium adsorption filter according to an embodiment of the present invention.

Referring to FIG. 12, when comparing K_{L} values, the transition metal-Prussian blue adsorbent with a light irradiation reaction added (Example 2, ZnFe-B) and the transition metal-Prussian blue adsorbent with a controlled oxidation state (Example 3, ZnFe-W) are more favorable for adsorption of cesium under low-concentration conditions than the Prussian blue adsorbent including a transition metal precursor and a Prussian blue precursor (Example 1, ZnFe-Y).

Accordingly, the transition metal-Prussian blue adsorbent according to an embodiment of the present invention is capable of adsorbing cesium even at low concentrations, thereby effectively adsorbing low-concentration radioactive cesium.

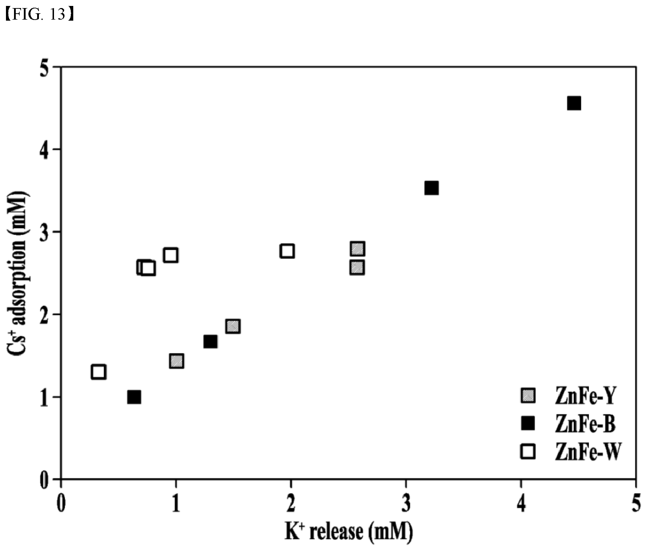

FIG. 13 is a graph comparing a cesium ion adsorption concentration and a concentration of K⁺ released into a solution for Prussian blue adsorbents (Example 1, Example 2, and Example 3) in a method for manufacturing a radioactive cesium adsorption filter according to an embodiment of the present invention.

Referring to FIG. 13, in a Prussian blue adsorbent including a transition metal precursor and a Prussian blue precursor (Example 1, ZnFe-Y) and a transition metal-Prussian blue adsorbent with a light irradiation reaction added (Example 2, ZnFe-B), since a cesium ion adsorption concentration and a concentration of K⁺ released into the solution exhibit a 1:1 ratio, it can be confirmed that adsorption occurs according to an ion-exchange mechanism.

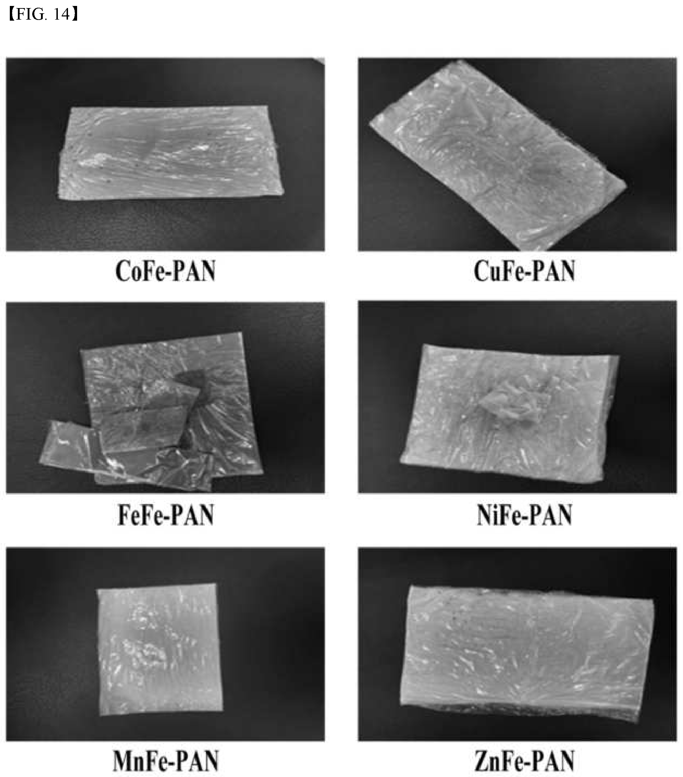

FIG. 14 is an image of a radioactive cesium adsorption filter (Example 4) including a transition metal-Prussian blue adsorbent according to Example 1 in the method for manufacturing a radioactive cesium adsorption filter according to an embodiment of the present invention.

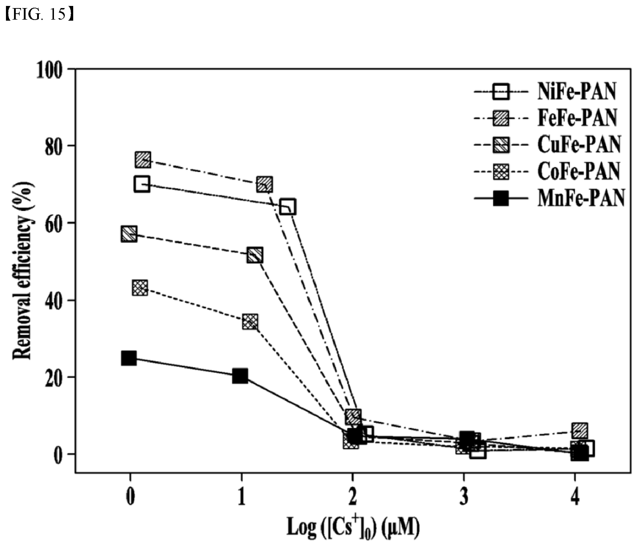

FIG. 15 is a schematic diagram of an experiment including a radioactive cesium adsorption filter (Example 4) including a transition metal-Prussian blue adsorbent according to Example 1, and a graph comparing a degree of cesium adsorption.

Referring to FIGS. 14 and 15, radioactive cesium adsorption filters including a transition metal-Prussian blue adsorbent (CoFe-PAN, CuFe-PAN, FeFe-PAN, MnFe-PAN, NiFe-PAN, and ZnFe-PAN) prepared according to an embodiment of the present invention were evaluated by passing solutions having initial cesium concentrations of 10 mM, 1 mM, 100 µM, 10 µM, and 1 µM through an adsorbent filter having an adsorbent amount of 0.05 g at a high flow rate of 60 mL/min.

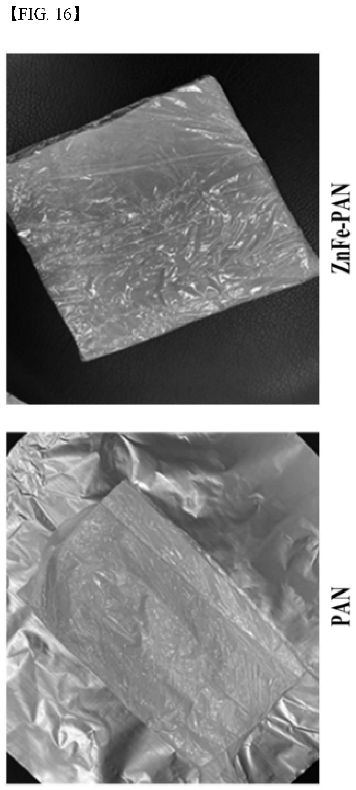

FIG. 16 is an image of a radioactive cesium adsorption filter not including a transition metal-Prussian blue adsorbent with a light irradiation reaction added (Comparative Example 1, PAN), and a radioactive cesium adsorption filter (Example 5, ZnFe-PAN) including a transition metal-Prussian blue adsorbent according to Example 2.

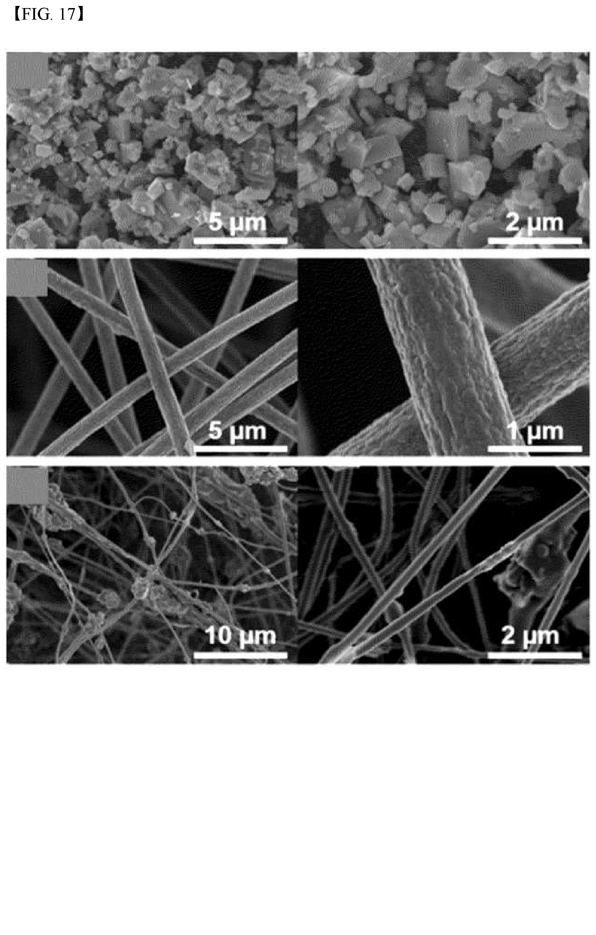

FIG. 17 is an SEM image of a transition metal-Prussian blue adsorbent with a light irradiation reaction added (Example 2), a radioactive cesium adsorption filter not including a transition metal-Prussian blue adsorbent with a light irradiation reaction added (Comparative Example 1), and a radioactive cesium adsorption filter (Example 5) including a transition metal-Prussian blue adsorbent according to Example 2.

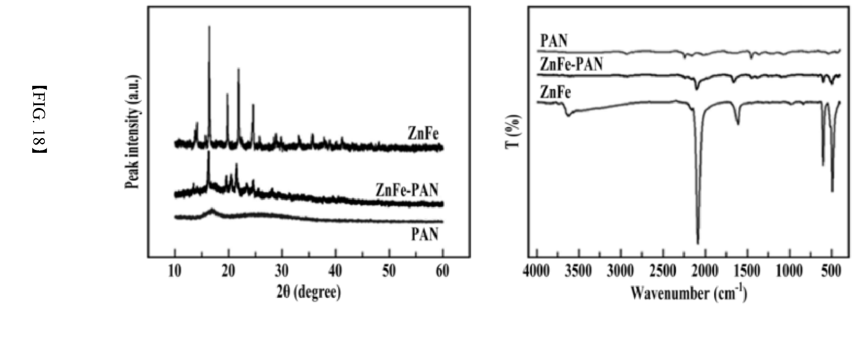

FIG. 18 is a graph illustrating XRD and FT-IR results of a transition metal-Prussian blue adsorbent with a light irradiation reaction added (Example 2, ZnFe), a radioactive cesium adsorption filter not including a transition metal-Prussian blue adsorbent with a light irradiation reaction added (Comparative Example 1, PAN), and a radioactive cesium adsorption filter (Example 5, ZnFe-PAN) including a transition metal-Prussian blue adsorbent according to Example 2.

Referring to FIGS. 16 to 18, it can be confirmed that the transition metal precursor ZnFe is supported in the radioactive cesium adsorption filter without structural change, and thus a radioactive cesium adsorption filter having improved adsorption capacity may be manufactured.

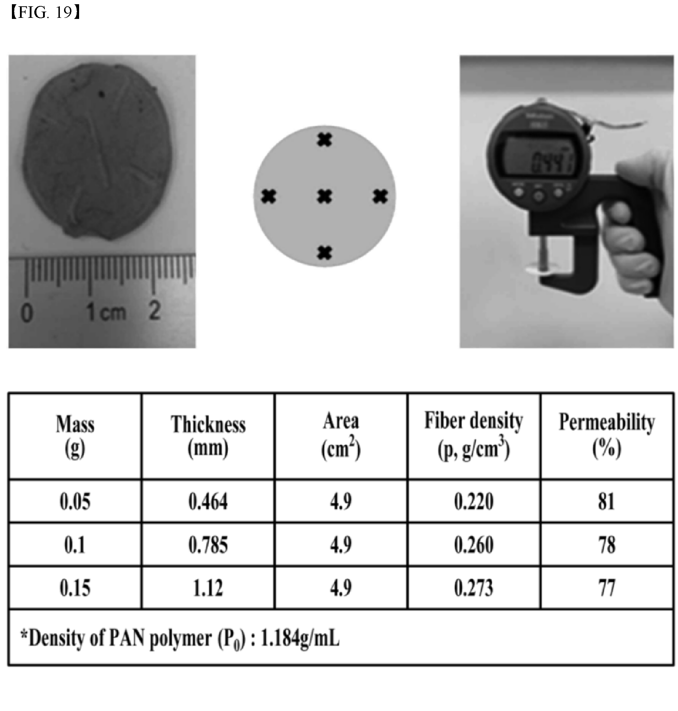

FIG. 19 is an image of a radioactive cesium adsorption filter (Example 5) including a transition metal-Prussian blue adsorbent according to Example 2, and a table measuring an adsorbent thickness.

Referring to FIG. 19, the radioactive cesium adsorption filter including the transition metal-Prussian blue adsorbent according to Example 5 has a thickness of 0.464 to 1.12 and a mass of 0.05 to 0.15, and thus it can be confirmed that a permeability varies from 77% to 81%.

Accordingly, it can be confirmed that permeability decreases as at least one of the thickness or the mass of the filter increases, and as a result, an adsorption rate of the radioactive cesium adsorption filter including the transition metal-Prussian blue adsorbent according to an embodiment of the present invention is improved.

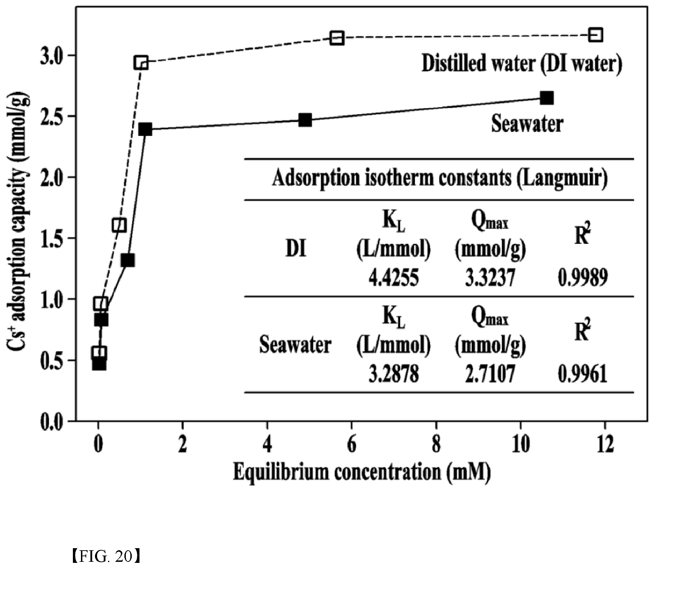

FIG. 20 is a graph comparing cesium adsorption capacity of distilled water (DI water) and seawater using a radioactive cesium adsorption filter (Example 5) including a transition metal-Prussian blue adsorbent according to Example 2.

FIG. 20 shows that an adsorption equilibrium isotherm plays an important role in determining distribution of adsorbate molecules between solid and liquid phases when an adsorption process reaches equilibrium. A classical Langmuir isotherm model is used in an embodiment of the present invention to define the adsorption isotherm, and adsorption performance is predicted by constants obtained from the isotherm.

Referring to FIG. 20, the radioactive cesium adsorption filter (Example 5) including the transition metal-Prussian blue adsorbent according to Example 2 exhibits high cesium adsorption capacity even in seawater, and under low-concentration cesium conditions, there is little difference in cesium adsorption capacity between distilled water and seawater.

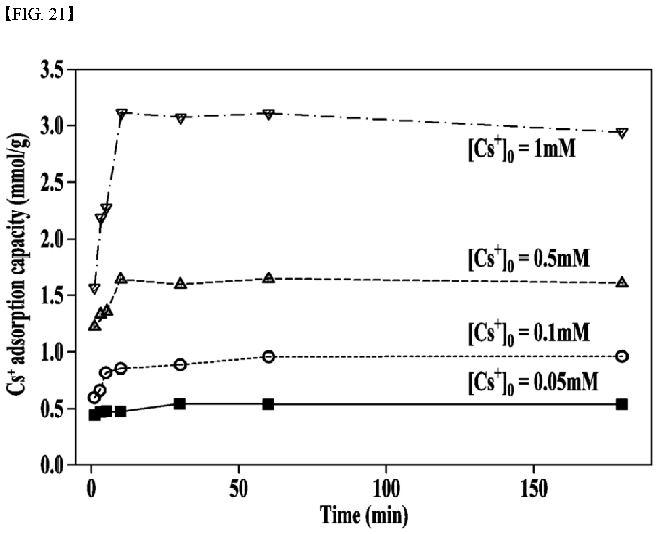

FIG. 21 is a graph comparing adsorption amounts over time according to cesium concentrations using a radioactive cesium adsorption filter (Example 5) including a transition metal-Prussian blue adsorbent according to Example 2.

Referring to FIG. 21, it can be confirmed that adsorption of cesium at low concentrations is saturated within 1 minute, and low-concentration cesium may be separated from seawater and adsorbed onto the radioactive cesium adsorption filter without interference from competing ions even under seawater conditions.

Accordingly, the radioactive cesium adsorption filter according to an embodiment of the present invention is suitable as an adsorbent for high-speed sampling for monitoring radioactive cesium concentration in seawater.

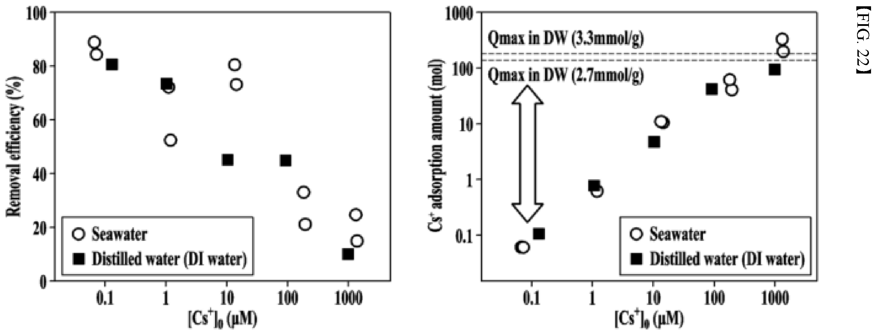

FIG. 22 is a graph comparing adsorption efficiency according to cesium concentrations using a radioactive cesium adsorption filter (Example 5) including a transition metal-Prussian blue adsorbent according to Example 2.

Referring to FIG. 22, when 1 L of water is passed at a flow rate of 60 mL/min using an adsorbent filter having a weight of 0.055 g, as the cesium concentration increases by 10 times, 100 times, and 1000 times, the adsorption rate decreases to 80%, 70%, 50%, and 20%, respectively, whereas an amount of cesium adsorbed onto the adsorbent increases.

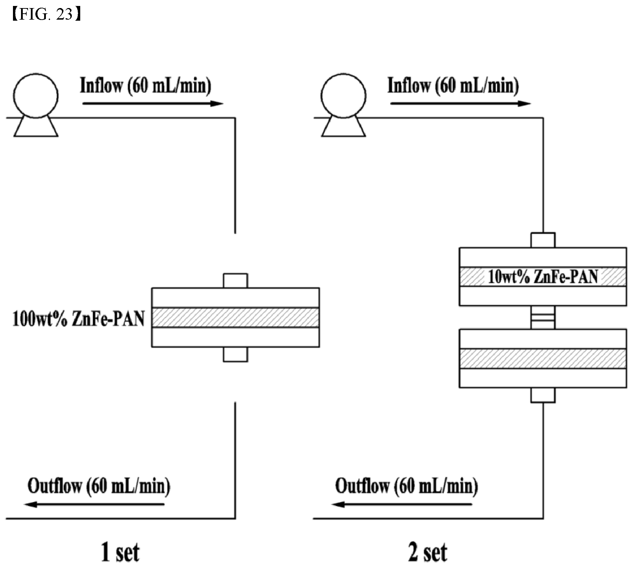

FIG. 23 is a schematic diagram illustrating a process of performing cesium adsorption using a radioactive cesium adsorption filter (Example 5) including a transition metal-Prussian blue adsorbent according to Example 2.

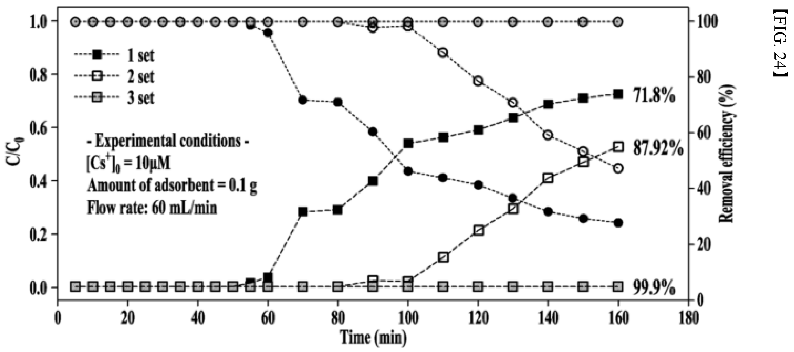

FIG. 24 is a graph comparing a cesium adsorption rate of a radioactive cesium adsorption filter (Example 5) including a transition metal-Prussian blue adsorbent according to Example 2.

The experiment of FIG. 24 was conducted by passing 10 L of water containing low-concentration cesium of 10 µM at a flow rate of 60 mL/min for 2 hours and 40 minutes.

Accordingly, referring to FIGS. 23 and 24, as the number of radioactive cesium adsorption filters increases from 1 to 2 and 3, an overall cesium adsorption rate increases to 71.8%, 87.92%, and 99.9%, respectively. Thus, it can be confirmed that adsorption performance of the radioactive cesium adsorption filter is improved as an adsorbable portion of the radioactive cesium adsorption filter increases.

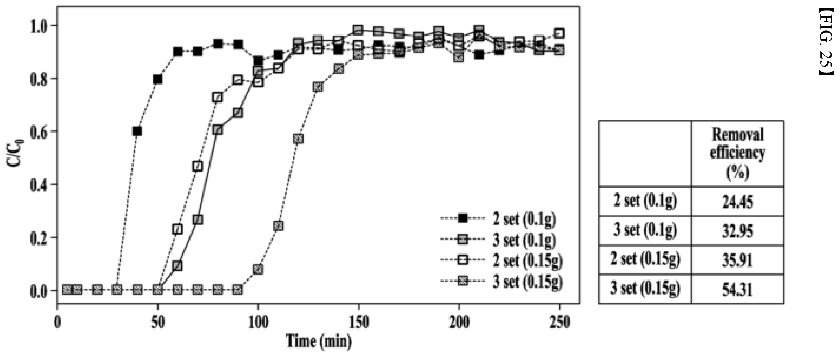

FIG. 25 is a graph comparing a cesium adsorption rate according to an adsorbent weight of a radioactive cesium adsorption filter (Example 5) including a transition metal-Prussian blue adsorbent according to Example 2.

The experiment of FIG. 25 was conducted by passing a large volume of water containing high-concentration cesium of 50 µM at a flow rate of 60 mL/min for 4 hours such that cesium adsorption is saturated.

Referring to FIG. 25, when three radioactive cesium adsorption filters are used and a weight of the adsorbent filter is 0.15 g, a cesium adsorption efficiency is 54.31%, and when three radioactive cesium adsorption filters are used and a weight of the adsorbent filter is 0.1 g, a cesium adsorption efficiency is 32.95%. Accordingly, as the number and weight of the radioactive cesium adsorption filters increase, an adsorbable portion increases, and thus a cesium adsorption rate also increases.

Accordingly, the radioactive cesium adsorption filter according to an embodiment of the present invention provides a method for manufacturing a radioactive cesium adsorption filter by preparing a transition metal-Prussian blue adsorbent through light irradiation and control of an oxidation state, thereby increasing adsorption efficiency of cesium, and a radioactive cesium adsorption filter manufactured thereby.

Further, the radioactive cesium adsorption filter according to an embodiment of the present invention may be used for high-speed sampling so as to selectively adsorb an ultra-trace amount of radioactive cesium, allow a large volume of seawater to pass therethrough within a short time, and be directly applicable to a detector.

Although the present invention has been described with reference to limited embodiments and the accompanying drawings as described above, the present invention is not limited to the embodiments described above, and various modifications and variations may be made by those of ordinary skill in the art to which the present invention pertains.

Accordingly, the scope of the present invention should not be limited to the described embodiments, but should be defined by the appended claims and equivalents thereof.

## Claims

1. A method for manufacturing a radioactive cesium adsorption filter, comprising:
preparing a transition metal-Prussian blue adsorbent using a transition metal precursor and a Prussian blue precursor;
preparing a spinning solution by dissolving the transition metal-Prussian blue adsorbent and a nanofiber polymer in an organic solvent; and
manufacturing a radioactive cesium adsorption filter by electrospinning the spinning solution,
wherein the transition metal-Prussian blue adsorbent is represented by Chemical Formula 1:
[Chemical Formula 1] RₙM¹ₓ[M²(CN)₆] · H₂O
wherein R is an alkali metal, M¹ comprises at least one selected from Mn, Ni, Cu, Co, Fe, and Zn, M² comprises at least one selected from Mn, Ni, Cu, Co, Fe, and Zn, n is selected from 0.1 to 3, and x is selected from 1 to 2.

2. The method of claim 1,
wherein the Prussian blue precursor is represented by Chemical Formula 2:
[Chemical Formula 2] [M²(CN)₆]^{m-}
wherein M² comprises at least one selected from Mn, Ni, Cu, Co, Fe, and Zn, and m is selected from 3 or 4.

3. The method of claim 1,
wherein the transition metal precursor is any one of CoCl₂, CuCl₂, FeCl₂, MnCl₂, NiCl₂, and ZnCl₂.

4. The method of claim 1,
wherein a weight ratio of the transition metal precursor to the Prussian blue precursor is in a range of 1:0.5 to 1:2.

5. The method of claim 1,
wherein the preparing of the transition metal-Prussian blue adsorbent further comprises:
irradiating light onto the transition metal-Prussian blue adsorbent,
wherein the light is ultraviolet light or visible light.

6. The method of claim 5,
wherein the irradiating of the light reduces the Prussian blue precursor.

7. The method of claim 5,
wherein a wavelength of the light is in a range of 250 nm to 600 nm.

8. The method of claim 7,
wherein the light is irradiated for 5 minutes to 48 hours.

9. The method of claim 1,
wherein the preparing of the transition metal-Prussian blue adsorbent comprises controlling a number of the alkali metal by adjusting an oxidation state of the Prussian blue precursor.

10. The method of claim 9,
wherein the transition metal precursor is zinc sulfate (ZnSO₄) or zinc chloride (ZnCl₂).

11. The method of claim 1,
wherein the preparing of the spinning solution comprises:
preparing a polymer-organic solvent solution by dissolving the nanofiber polymer in the organic solvent; and
preparing the spinning solution by adding the transition metal-Prussian blue adsorbent to the polymer-organic solvent solution.

12. The method of claim 11,
wherein the nanofiber polymer is included in an amount of 5 parts by weight to 30 parts by weight based on 100 parts by weight of the spinning solution.

13. The method of claim 11,
wherein the transition metal-Prussian blue adsorbent is included in an amount of 0.1 parts by weight to 20 parts by weight based on 100 parts by weight of the spinning solution.

14. The method of claim 11,
wherein the nanofiber polymer is any one selected from polyacrylonitrile, polystyrene, polymethyl methacrylate, polyurethane, nylon 6, nylon 66, polylactic acid, polycarbonate, polyvinylidene chloride, polyvinylidene fluoride, polyvinyl alcohol, polyethylene oxide, polyvinyl chloride, polybenzimidazole, polyethylene terephthalate, polyethylene, and polypropylene.

15. A radioactive cesium adsorption filter for high-speed pretreatment, manufactured according to any one of claims 1 to 14, comprising:
a nanofiber filter; and
the transition metal-Prussian blue adsorbent supported on the nanofiber filter,
wherein the transition metal-Prussian blue adsorbent is represented by Chemical Formula 1:
[Chemical Formula 1] RₙM¹ₓ[M²(CN)₆] · H₂O
wherein R is an alkali metal,
M1 comprises at least one selected from Mn, Ni, Cu, Co, Fe, and Zn,
M2 comprises at least one selected from Mn, Ni, Cu, Co, Fe, and Zn,
n is selected from 0.1 to 3, and
x is selected from 1 to 2.

16. The radioactive cesium adsorption filter of claim 15,
wherein an adsorption rate is controlled according to at least one of a thickness or a mass of the radioactive cesium adsorption filter for high-speed pretreatment.
